(19) Europäisches Patentamt
European Patent Office
Office européen des brevets

(11) Publication number: **0 019 286**
**B1**

(12) # EUROPEAN PATENT SPECIFICATION

(45) Date of publication of patent specification: **02.10.85**

(51) Int. Cl.$^4$: **G 06 F 13/00,** H 04 N 7/08, H 04 L 11/00

(21) Application number: **80102738.4**

(22) Date of filing: **16.05.80**

(54) **Data communications terminal.**

(30) Priority: **18.05.79 US 40472**

(43) Date of publication of application:
**26.11.80 Bulletin 80/24**

(45) Publication of the grant of the patent:
**02.10.85 Bulletin 85/40**

(84) Designated Contracting States:
**AT BE CH DE FR GB IT LI LU NL SE**

(56) References cited:
**DE-A-2 109 658**
**DE-A-2 539 977**
**DE-A-2 543 555**
**DE-B-2 260 621**
**GB-A-1 455 944**
**US-A-3 312 951**
**US-A-3 832 690**
**US-A-4 026 555**
**US-A-4 099 203**
**US-A-4 107 780**
**US-A-4 117 459**

(73) Proprietor: **TOCOM, INC.**
**P.O. Box 47066**
**Dallas Texas 75247 (US)**

(72) Inventor: **Bundens, Allan B**
**1831 Clear Creek Lane**
**Carrollton Texas 75007 (US)**
Inventor: **Schoeneberger, Carl F.**
**2032 Christie Lane**
**Carrollton Texas 75007 (US)**

(74) Representative: **Patentanwälte Dipl.-Ing. A. Grünecker, Dr.-Ing. H. Kinkeldey, Dr.-Ing. W. Stockmair,**
**Dr. rer. nat. K. Schumann, Dipl.-Ing. P.H. Jakob,**
**Dr. rer. nat. G. Bezold Maximilianstrasse 58**
**D-8000 München 22 (DE)**

(56) References cited:
**Funkschau 1978, No. 19, pp. 921-924**
**Japan Telecommunications Review, January 1977, pp. 20-28**
**Electronics, July 7 1977, pp. 109-112**
**Elektronisch 1976, book 12, pp. 58-62**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 019 286 B1**

**Description**

The present invention concerns a data terminal for use in a cable television distribution system in accordance with the generic clause of claim 1.

Reference, "Funkschau" 1978, No. 19, pages 921 to 924, discloses a data terminal for use in a cable television distribution system having a central processing system and a plurality of such data terminals. This prior art cable television distribution system comprises a television program source which is a television studio and a plurality of cable television receivers. Each terminal comprises a microcomputer processing means located remotely from said centre processing system. Usually, such a terminal comprises a data interface means for receiving data from said central processing system and for transmitting data to said central processing system from the microcomputer processing means, said data interface means usually comprising a converter for converting said data to a processing format which is compatible with the format used by the microcomputer processing means. The microcomputer of this prior art system is programmed such that it is capable of identifying data addressed to the microcomputer for selecting corresponding data from the data flow in the cable television network. In other words, each terminal has a predetermined address which can be recognized by its microcomputer processing means. The central processor only transmits information regarding the desired position of channel switches to the respective remote microcomputers. After setting the switches, the microcomputer generates a response signal transmitted to the central computer for notifying the central computer that the channel switches have the desired position. In other words, the two-way-communication of this prior art system is only capable of transmitting information regarding predetermined switch positions to the remote processors and of confirming the respective channel-switching operation carried out by the respective remote microcomputer. This prior art data terminal seems to be only suitable for the very limited purpose of controlling the position of the switches connecting the remote television receivers to a predetermined channel and for confirming the actual position of the switches. This prior art data terminal is not adapted for enabling the television distribution system to carry out additional operations without burdening the central processing system with additional work.

US—A—3 832 690 concerns a cable television system which is capable of providing two-way-communication between a central processor and a lot of terminals. Each terminal can be activated upon receiving a predetermined code serving as an address code of the terminal. Each television receiver connected to such a terminal comprises transmitting units for generating information of fire alarm, keyboard controlled message information or other desired data. Groups of these data transmitters are connected to the central system through switch circuits of the data terminal which are selectively addressed by a predetermined code to provide communication between each data transmitter and the central system. This prior art data terminal does not carry out any selection of information transmitted to the central processing system, as the respective data terminal does not evaluate any information received from the transmitting units located at the television receivers, i.e. this prior art data terminal does not enable the television distribution system to carry out additional operations without burdening the central processing system with additional work. In other words, the central processing system has to periodically check the status of each remote unit.

"Japan Telecommunications Review", January 1977, pages 20 to 28 discloses a cable television distribution system comprising a central processing system (CCPU) and a plurality of data terminals, said data terminals comprising a terminal control unit connected to several device control units, which in turn are connected to TV-sets and keyboards. This reference does not include any indication as to the communication between the device control units and the terminal control unit.

DE—B2—2260621 discloses a data terminal for use in a cable television distribution system having a central processing system and a plurality of such data terminals, said cable television distribution system having a television programme source and a plurality of cable television receivers. The data terminal comprises processing means located remotely from said central processing system. It further includes a data interface means for receiving data from said central processing system and for transmitting data to said central processing system from said processing means wherein said data interface means includes means for converting said data to a processing format compatible with said processing means, further includes identification means for identifying data addressed to said processing means, includes data generating means coupled to said processing means for causing said processing means to output data, and comprises address decode means. This prior art data terminal is capable of two-way data communication with the central processing system. By activating a push-button a processing means generates a control signal fed to a data generating means, which in turn generates a request signal containing a channel code and an address code for transmitting it to the central processing system. In response hereto the central processing system selects the desired television programme and transmits this programme combined with an enable-signal. The identification means of the data terminal decodes said enable signal, checks whether the enable signal corresponds with a predetermined data pattern and, if so, activates a converter for feeding the television programme signal to the cable television receiver. In other words, the data terminal of this prior art cable television distribution system is a generally passive circuitry only carrying out instructions received from the central processing system, besides the fact that it is capable of generating television programme request signals for transmitting it to the central processing system. Thus, this prior art terminal is only suitable for the very limited purpose of requesting a desired television programme and receiving it, wherein the data terminal prevents a reception of transmitted television programme in case that the user of this data terminal is not entitled to receive the desired television programme. Nowadays, it is desired that a data terminal for use in a cable television distribution system provides security monitoring functions by generating status and alarm data to be directed to the central processing system. In other words, this prior art data terminal is not capable of reporting on the status of various alarm indicators including those for fire, medical emergency and so on. Due to the very limited flexibility of the prior art data terminal, it is not possible to use this data terminal for a great variety of purposes.

DE—A1—2109658 discloses a data terminal for use in a television fee registration system having a central processing system and a plurality of such data terminals, said television fee registration system being capable of checking which television programme has been received by the user of the television receiver during the recent time. Based on this information, an amount corresponding to the individual time of reception of a television programme as received by an individual television receiver can be charged to the user of this television receiver. Particularly, the data terminal contains a remote data processing unit which periodically checks which programme is at the moment received by one of a plurality of television receivers. By periodically repeating such a check the data processing unit can find out whether the received television programme has changed in the meantime or is still the same one. Thus, the data processing unit is enabled to periodically refresh the information about the television programme as received by the individual television receivers. This information is stored in a memory of the remote data processing unit. A central processing means for carrying out the calculation of the individual television fee is connected to the plurality of remote data processing units by means of the telephone network. By transmitting a predetermined request signal to the remote data processing units, the central processing unit activates the latter, so that the remote data processing units transfer the stored data to the central processing unit. In other words, a data transfer from the remote data processing unit to the central data processing unit does not have to take place very often, as the remote data processing units free the central data processing unit from periodically checking which television programme is received at the moment by each individual television receiver, and thus diminishes the data density to be transferred to the central processing system. This prior art system even utilizes the remote data terminal for periodically storing the respective chosen television programmes of a set of television receivers.

In view of the above mentioned state of art the present invention is based on the technical task of how to provide a data terminal in accordance with the generic clause of claim 1 having a high degree of efficiency for enabling the television distribution system to carry out additional operations without burdening the central processing system with additional work, while maintaining a high degree of reliability of the distribution system.

This technical task is solved by a data terminal in accordance with the generic clause of claim 1 having the characterizing features thereof.

Preferred embodiments of the present invention will be described hereinafter with reference to the attached drawings.

Brief Description of the Drawings

FIGURE 1 is a system block diagram of a preferred embodiment of a data processing terminal according to the present invention;

FIGURE 2 is a block diagram of the RF modem shown in FIGURE 1;

FIGURE 3 is a block diagram of the television port shown in FIGURE 1;

FIGURE 4 is a block diagram of the interrupt control circuit shown in FIGURE 1;

FIGURE 5 is a block diagram of the power reset/watchdog timer circuitry shown in FIGURE 1;

FIGURE 6 is a flow diagram showing the internal procedure of operation of the data processing terminal shown in FIGURE 1; and

FIGURE 7 is a flow diagram showing the interfacing procedure of operation of the terminal unit shown in FIGURE 1 in communication with a central data processing system.

Description of the Illustrated Embodiment

Referring now to FIGURE 1, a system 10 is shown as a preferred embodiment of the present invention. The remote terminal system utilizes a microcomputer to provide compact size and a higher level of intelligence than achieved with conventional relatively inexpensive terminals. The modular nature of the terminal system readily enables additional apparatus to be added to provide additional functions for the system. The terminal system shown normally communicates from remote locations through a bi-directional coaxial cable system with a central processing or a remote data processor which is part of a general data communications network. Each terminal system has a unique address that allows the central processor to request the status of a plurality of alarm monitoring inputs every few seconds. The terminal systems are also designed to accommodate the input and output of a wide variety of data which may be used in consumer polling, shopping and advertising feedback, as well as in monitoring and controlling access to TV channel usage, meter readout and energy management and other sophisticated applications of cable systems.

Information is received by system 10 through coaxial input and output data links 12 and 14 to a conventional television port unit 16 which is activated and deactivated by commands from the central processor unit. The central processor preferably uses both time and frequency division multiplexing procedure to communicate with terminal 10 and many other terminals. Each terminal is assigned an identification code and a response frequency to coincide with these multiplexing functions.

An example of a sophisticated multiplexing system is disclosed in our copending European patent application 80102739.2 (EP—A—19287). From the port unit 16 the data is then transferred along a coaxial bus 18 to a radio frequency modem unit 20 which interfaces with the central processor and converts the data to a suitable format for terminal usage. Modem 20 is connected by transmission line 22 to interrupt control circuitry 24. This circuit generates an interrupt signal when data is received from the central processor through RF modem 20. The interrupt signal is transmitted along line 26 to a microprocessor 30 which is the center of the terminal system 10.

A second input is direct to microcomputer 30 by a power reset/watchdog timer circuit 23 along a reset line 27. A reset signal is sent to microcomputer 30 by circuit 23 when power to the system is turned off or on. In addition, the watchdog timer portion of circuit 23 monitors periodic pulses from microcomputer 30 along transmission line 62 which indicates that the system 10 is in proper functional order. If a pulse is not received by circuit 23 within a predetermined period of time, the circuit generates a reset pulse along line 27 to reset microcomputer 30.

The input data is transmitted along line 32 to a receiver/transmitter unit 34. The unit is preferably a universal asynchronous receiver/transmitter (UART) which converts serial digital data to parallel data words which can be utilized by the microprocessor 30. Likewise, UART unit 34 converts outgoing parallel data to serial digital data for transmission along line 36 to the RF modem 20 to be transmitted to the central processing unit. Conventional communication timing circuitry 38 provides timing pulses to receiver/transmitter 34 which are generated by a crystal controlled oscillator 40.

Receiver/transmitter 34 communicates the converted data to microcomputer 30 over the main data bus 42 connecting these two units and other major units of system 10. An identification buffer 44 is also connected to main data bus 42 to enable microcomputer 30 to identify the terminal so that a determination can be made as to whether terminal 10 is being addressed by the central processing unit. Buffer 44 is connected to a master identification unit 46 having a unique identification code therein. The identification code data is accessed by microcomputer 30 through buffer 44 and is compared to the identification portion of the incoming data to make the identification determination. An alarm buffer 48 is also connected to common data bus 42 and receives input data from a master alarm unit 50 comprising a plurality of data generating sensors. This alarm data is also transmitted to microcomputer 30 over data bus 42 for appropriate processing.

An address decode unit 52 is also connected to the main data bus 42 and serves to define each of the elements of system 10 and to activate and deactivate these elements in response to control data from microcomputer 30. Decode unit 52 is preferably a strobed latched decoder and is connected to receiver/transmitter 34, identification buffer 44 and alarm buffer 48 by transmission lines 54, 56 and 58 respectively for the purpose of activating and deactivating those units. Decode unit 52 also transmits control signals to interrupt control circuit 24 along transmission line 60 and to power reset/watchdog timer circuit 23 along transmission line 62.

In addition to main data bus 42, microcomputer 30 also provides a plurality of control outputs for various elements in system 10. An enable pulse is provided along a transmission line 70 to RF modem 20 in order to activate the modem transmitter. A control pulse is also provided along output line 72 for turning on an appropriate conventional anunciator in response to the detection of an alarm data input. Another output transmission line 74 provides an emergency alert control signal coming from the central processor to activate various emergency warning devices. Other control signal output is provided along line 76 to TV port 16 to enable reception of transmitted television signals by a television receiver along coaxial cable 14. Finally, an input transmission line 78 connected to appropriate anunciator circuitry transmits a reset control signal to microcomputer 30 when the anunciator is to be reset.

In addition to the foregoing, a second major data bus 80 is provided to enable further compatible expansion of the functions of microcomputer 30 for some of the other data acquisition and control functions mentioned earlier. A conventional power supply 82 having AC/DC inputs provides the necessary power requirement for terminal 10 and also activates one of the alarm inputs in alarm unit 50 when power is low or fails.

In one preferred embodiment of the foregoing system 10, microcomputer 30 comprises a one chip microcomputer including a random access memory having 64 bytes and a read-only memory having 1024 bytes storage. A compatible microcomputer chip is the 8048 or 8748 chip available through Intel Corporation. In this preferred embodiment, receiver/transmitter 34 is a UART unit, model No. IM6402, provided by Intersil Corporation. The communications timing unit 38 comprises a model 74LS161 chip made by Texas Instruments and driven by a 3.58 megahertz crystal controlled oscillator. The address decode unit 52 is a MC14515B decoder unit made by Motorola Corporation.

The alarm input unit 50 is preferably a plurality of control switches arranged to monitor various security and process functions. In one preferred embodiment, the switches are resistance-controlled switches connected to a sensing wire having an established resistance. If the resistance substantially changes, the resistance control switches detect the abnormal condition and direct a pulse to alarm buffer 48 which relays the data to microcomputer 30.

Similarly, the identification master unit 46 is preferably a group of switches or relays which can be set to provide a unique identification code for terminal 10. This code is output through buffer 44 to data bus 42 for reception and processing by microcomputer 30.

Referring now to FIGURE 2, RF modem 20 is shown in greater detail. Incoming signals on coax cable 15 are preferably frequency modulated signals having a frequency shift key mode. The signals have been generated by a similar RF modem unit in the central data processing unit upstream along coaxial cable 15. The data signals are first input to a frequency splitter circuit 90 which separates incoming data having different frequencies. The incoming data is directed to an FSK receiver unit 92 which converts the data to a digital format for internal use by the terminal logic. The digital data is then output on transmission line 32 to UART 34.

Data coming from UART 34 along transmission line 36 is directed to an FSK transmitter circuit 94 which converts the digital data to frequency shift key form at the designated carrier frequency of the terminal. The data is then passed to a level control and filter unit 96 which monitors and controls the level of transmitter power and filters out unnecessary harmonics in the signal. From control and filter unit 96 the outgoing data is directed to frequency splitter 90 which in turn passes the data on to coaxial cable 15 which also carries the incoming data from the central processor.

It is understood that the incoming data from the central processor is transmitted at a different frequency than the outgoing data from the terminals. In one preferred embodiment, incoming central processor data is frequency shift keyed at about 158.55 megahertz. The outgoing data from a plurality of terminals like terminal 10 in a given terminal group are each modulated about a different frequency. In a preferred embodiment, the terminal frequencies range between 18.2 and 30 megahertz. As an example, the return frequency for RF modem 20 may be set at 18.2 megahertz.

Additional control inputs are fed to FSK transmitter 94. An enable signal is processed from microcomputer 30 along line 72 to enable the operation of transmitter 94. FSK receiver 92 and FSK transmitter 94 are both similar to conventional units widely available in the marketplace, as are splitter circuit 90 and control and filter unit 96.

Television port 16 is shown in FIGURE 3 in greater detail. The port includes a frequency splitter for separating input and output control data from input television signals on coaxial cable 12. The control data is processed in and out over line 15 to RF modem 20 while the television signals are separated and directed to an amplifier 102 and then to a coaxial cable output 14 for processing by an appropriate television receiver. A TV port enable signal is received along line 76 from microcomputer 30 to actuate the television reception upon proper authorization being established through the control data processing.

Looking at FIGURE 4, interrupt control circuitry 24 is shown in more detail. Incoming data on line 22 is input to a retriggerable one-shot circuit 110 which outputs a pulse to a flip-flop 112 when a substantial change is determined in the transmission of data. Flip-flop 112 then directs an interrupt signal to central processor 30 along line 26 to notify the microcomputer 30 of the data transmission change.

In one preferred embodiment, one-shot circuit 110 monitors the incoming data and outputs a single pulse on line 111 if there is an absence of incoming data over a given period of time. This single pulse then triggers the appropriate interrupt signal to microcomputer 30. Thus, the presence or absence of data pulses over a given period of time may be detected by microcomputer 30 to signal a change in the type of data being directed to the terminal. This approach substantially increases the intelligence of the terminal by helping the microcomputer to interpret the transmissions by the amount of time space between the signal groups. An interrupt reset signal is received along line 60 from address decode unit 52 to shut off flip-flop 112 after the message has been received by microcomputer 30.

FIGURE 5 shows the power reset/watchdog timer circuit 23 in more detail. Input pulses are directed from address decode unit 52 along line 62 to a retriggerable one-shot circuit 120. Output pulses from circuit 120 are directed along line 122 to a conventional flip-flop circuit 124 which in turn generates a reset signal on the line to microcomputer 30. A power reset circuit 128 provides a second input to flip-flop circuit 124 for initiating an output signal on line 126. The reset pulse is also fed back through a time delay circuit 130 to a reset input terminal on flip-flop 124.

As long as the microcomputer 30 and associated circuitry are operating properly, input pulses are fed periodically along line 62 to one-shot circuit 120. If an absence of pulses is detected over a predetermined period of time, an output signal is directed to flip-flop 124 to begin the reset signals to the microcomputer. Similarly, if power is turned off or on to the system, power reset circuit 128 inputs a signal to flip-flop 124 to begin the reset signal to microcomputer 30. Time delay circit 130 simply resets flip-flop 124 after transmission of the reset pulse for a given period of time.

With reference to FIGURE 6, a flow diagram is shown describing the normal procedure of the terminal system 10 with regard to its internal monitoring and control functions. The functions shown in FIGURE 6 are embodied in the software programming of microcomputer 30 and describe its relationship with the other main units of system 10 shown in FIGURE 1.

The procedure begins by resetting microcomputer 30 to initial predetermined values. A determination is made as to whether the level of power is sufficient for normal operation. If not, processing is disabled until power reaches the necessary level. Otherwise, processing is enabled and a determination is made as to whether the computer is functioning properly. If it is, a pulse is generated to be transmitted to power reset/watchdog timer circuit 23. If not, the pulse is omitted.

Microcomputer 30 then determines whether alarm data has been generated by one of alarm inputs 50. If so, a determination is made as to the type of alarm input data being received and the microcomputer decides whether an annunciator should be activated. If not, the annunciator is turned off in the event that it has previously been activated. Otherwise, the annunciator is activated and left on until the next cycle.

The microcomputer then reads whatever data may be present on data bus 80 regarding other types of data acquisition and control functions other than alarm functions. If special service or control is required from the central data system (CDS), an interrupt signal is queued for monitoring by the CDS in its normal interrogation routine. Next, a determination is made as to whether the CDS has sent command data which should be acted upon by the terminal. If so, the terminal processes the command data as instructed. In either event, the microcomputer then returns to the beginning of the main program.

Looking now at FIGURE 7, an interface routine is shown describing the communication procedure between the terminal system 10 of the present invention and its associated central data processing system. This routine begins by the generation of an interrupt signal by interrupt circuit 24 as previously described. At that point, a microprocessor 30 gives its attention to the data being received from the CDS. After a determination is made that data has been received, a comparison is made with the address portion of the data to determine whether it corresponds with the terminal identification code in master identification unit 46. If not, the transmitter is disabled and the interrupt routine ends. If so, the microcomputer 30 interprets the command data to determine whether it should receive or transmit data. If more data is to be received from the CDS, a determination is then made as to whether the terminal group matches the group number also stored in master identification unit 46. If so, the command data is stored for processing by the main program.

If the command from the CDS is for the terminal to send data rather than to receive it, the terminal transmitter is enabled and the requested data is transmitted to the CDS. The transmitter is then disabled and the interrupt routine is discontinued.

It should be understood that the practical implementation of the foregoing routines would be obvious to one skilled in the art given the previously described flow diagrams. It is also clear that other similar procedures may be implemented in the microcomputer of the present invention without departing from the scope of the invention.

**Claims**

1. Data terminal (10) for use in a cable television distribution system having a central processing system and a plurality of such data terminals, said cable television distribution system having a television program source and a plurality of cable television receivers, said data terminal (10) comprising:

processing means (30) located remotely from said central processing system, said processing means including a microcomputer (30),

data interface means (34) for receiving data, especially television program data, from said central processing system and for transmitting data to said central processing system from said processing means (30), said data interface means (34) including means (16, 20) for converting said data to a processing format compatible with said processing means (30),

identification means (44) for identifying data addressed to said processing means (30),

address decode means (52), and

a data bus (42) coupled to the processing means (30),

characterized in that the data terminal (10) comprises a first interrupt generating means (24) and at least one remote data generating unit (48) generating alarm data, each of which is coupled to said microcomputer processing means (30) for causing said microcomputer processing means (30) to output data,

that the microcomputer processing means (30) is coupled via the data bus (42) to said at least one remote data generating unit (48), to the data interface means (34), to the identification means (44) and to the address decode means (52), and

that the address decode means (52) generates control data to activate and de-activate said at least one remote data generating unit (48), the data interface means (34) and the interrupt generating means (24).

2. The data terminal (10) as claimed in claim 1, characterized in that said data interface means (34) includes first conversion means (20) for changing data received from said central processing system from a frequency modulated format to a digital format for processing by said microcomputer processing means (30) and for changing data received from said microcomputer processing means (30) from a digital format to a frequency modulated format to be transmitted to said central processing unit.

3. The data terminal (10) as claimed in claim 2, characterized in that said first conversion means (20) includes a frequency shift key receiver (92) and a frequency shift key transmitter (94).

4. The data terminal (10) as claimed in one of the claims 1—3, characterized in that said data interface means (34) includes second conversion means for converting serial bit data to parallel bit data and parallel bit data to serial bit data.

5. The data terminal (10) as claimed in claim 4, characterized in that the second conversion means comprises a universal asynchronous receiver/transmitter.

6. The data terminal (10) as claimed in one of the claims 1—5, characterized in that said data terminal (10) includes second interrupt generating means (23) for notifying said microcomputer processing means (30) of time lapses in data received from the central processing system, including means for monitoring data received from the central processing system and means for generating an interrupt signal to said microcomputer processing means (30) in response to the absence of said data over a predetermined period of time.

**Patentansprüche**

1. Datenübertragungs-Endgerät (10) zur Verwendung in einem Kabelfernsehverteilersystem mit einem zentralen Verarbeitungssystem und einer Mehrzahl derartiger Datenübertragungs-Endgeräte, wobei das Kabelfernsehverteilersystem eine Fernsehprogrammquelle und eine Mehrzahl von Kabelfernsehempfängern aufweist, wobei das Datenübertragungs-Endgerät (10) folgende Merkmale aufweist:

eine von dem zentralen Verarbeitungssystem entfernt gelegene Verarbeitungseinrichtung (30), die einen Mikrocomputer (30) enthält,

eine Datenschnittstelleneinrichtung (34) zum Datenempfang, insbesondere zum Empfang von Fernsehprogrammdaten von dem zentralen Verarbeitungssystem und zum Senden von Daten zu dem zentralen Verarbeitungssystem von der Verarbeitungseinrichtung (30), wobei die Datenschnittstelleneinrichtung (34) eine Einrichtung (16, 20) zum Umwandeln der Daten in ein Verarbeitungsformat aufweist, das mit der Verarbeitungseinrichtung (30) kompatibel ist,

eine Identifizierungseinrichtung (44) zum Identifizieren von Daten, die durch die Verarbeitungseinrichtung (30) adressiert sind,

eine Adreßdekodereinrichtung (52), und

einen Datenbus (42), der an die Verarbeitungseinrichtung (30) angeschlossen ist,

dadurch gekennzeichnet, daß

das Datenübertragungs-Endgerät (10) eine erste Unterbrechungserzeugungseinrichtung (24) und wenigstens eine entfernte, datenerzeugende Einrichtung (48) zum Erzeugen von Alarmdaten aufweist, die jeweils an die Mikrocomputerverarbeitungseinrichtung (30) angeschlossen sind, um die Mikrocomputereinrichtung (30) zur Datenausgabe zu veranlassen,

daß die Mikrocomputerverarbeitungseinrichtung (30) über den Datenbus an wenigstens eine entfernte datenerzeugende Einrichtung (48), an die Datenschnittstelleneinrichtung (34), an die Datenidentifizierungseinrichtung (44) und an die Adreßdekodereinrichtung (52) angeschlossen ist, und

daß die Adreßdekodereinrichtung (52) Steuerdaten erzeugt, um die wenigstens eine entfernte datenerzeugende Einrichtung (48), die Datenschnittstelleneinrichtung (34) und die Unterbrechungserzeugungseinrichtung (24) zu aktivieren und zu deaktivieren.

2. Das Datenübertragungs-Endgerät (10) nach Anspruch 1, dadurch gekennzeichnet, daß die Datenschnittstelleneinrichtung (34) eine erste Umwandlungseinrichtung (20) zum Ändern der von dem zentralen Verarbeitungssystem empfangenen Daten von einem frequenzmodulierten Format in ein digitales Format zum Verarbeiten durch die Mikrocomputerverarbeitungseinrichtung (30) und zum Ändern der von der Mikrocomputerverarbeitungseinrichtung (30) empfangenen Daten von einem digitalen Format in ein frequenzmoduliertes Format, das an die zentrale Verarbeitungseinheit geschickt wird, aufweist.

3. Das Datenübertragungs-Endgerät (10) nach Anspruch 2, dadurch gekennzeichnet, daß die erste Umwandlungseinrichtung (20) einen Frequenzverschiebungs-Kodierempfänger (92) und einen Frequenzverschiebungs-Kodiersender (94) aufweist.

4. Das Datenübertragungs-Endgerät (10) nach einem der Ansprüche 1 bis 3, dadurch gekennzeichnet, daß die Datenschnittstelleneinrichtung (34) eine zweite Umwandlungseinrichtung aufweist, um serielle Bitdaten in parallele Bitdaten und um parallele Bitdaten in serielle Bitdaten umzuwandeln.

5. Das Datenübertragungs-Endgerät (10) nach Anspruch 4, dadurch gekennzeichnet, daß die zweite Umwandlungseinrichtung einen universalen, asynchronen Sendeempfänger ausweist.

6. Das Datenübertragungs-Endgerät (10) nach einem der Ansprüche 1 bis 5, dadurch gekennzeichnet, daß das Datenübertragungs-Endgerät (10) eine zweite Unterbrechungserzeugungseinrichtung (23) enthält, um der Mikrocomputerverarbeitungseinrichtung (30) Zeitverzögerungen bezüglich der von dem zentralen Verarbeitungssystem empfangenen Daten mitzuteilen, mit einer Einrichtung zum Überwachen der von dem zentralen Verarbeitungssystem empfangenen Daten und mit einer Einrichtung zum Erzeugen eines Unterbrechungssignals für die Mikrocomputerverarbeitungseinrichtung (30) in Reaktion auf das Fehlen von Daten über eine vorbestimmte Zeitdauer.

**Revendications**

1. Terminal de données (10) destiné à être utilisé dans un système de télédistribution par câble comportant un système central de traitement et un ensemble de ces terminaux de données, le système de télédistribution comportant une source de programme de télévision et un ensemble de récepteurs de télédistribution, le terminal de données (10) comprenant:

un moyen de traitement (30) placé à distance du système central de traitement, le moyen de traitement comprenant un micro-ordinateur (30);

un moyen de transmission de données ou d'interface (34) pour recevoir des données, spécialement des données de programme de télévision, du système central de traitement et pour émettre des données en direction du système central de traitement à partir du moyen de traitement (30), le moyen d'interface de données (34) incluant un moyen (16, 20) pour convertir les données dans un format de traitement compatible avec le moyen de traitement (30);

un moyen d'identification (44) pour identifier les données adressées au moyen de traitement (30);

un moyen de décodage d'adresse (52); et

un bus de données (42) couplé au moyen de traitement (30);

caractérisé en ce que ce terminal de données (10) comprend un premier moyen générateur d'interruption (24) et au moins une unité génératrice de données à distance (48) engendrant des données d'alarme dont chacune est envoyée au moyen de traitement à micro-ordinateur (30) pour que le moyen de traitement à micro-ordinateur (30) engendre des données, en ce que le moyen de traitement à micro-ordinateur (30) est couplé par le bus de données (42) à au moins une unité génératrice de données à distance (48), au moyen d'interface de données (34), au moyen d'identification (44) et au moyen de décodage d'adresse (52), et en ce que le moyen de décodage d'adresse (52) engendre des données de commande pour rendre actifs et inactifs au moins l'un de l'unité génératrice de données à distance (48), du moyen d'interface de données (34) et du moyen générateur d'interruption (24).

2. Terminal de données selon la revendication 1, caractérisé en ce que le moyen d'interface de données (34) comprend un premier moyen de conversion (20) pour changer les données reçues du système central de traitement d'un format à modulation de fréquence en un format numérique pour un traitement par le moyen de traitement à micro-ordinateur (30) et pour changer les données reçues du moyen de traitement à micro-ordinateur (30) d'un format numérique en un format à modulation de fréquence à transmettre à l'unité centrale de traitement.

3. Terminal de données selon la revendication 2, caractérisé en ce que le premier moyen de conversion (20) comprend un récepteur de manipulation par variation de fréquence (92) et un émetteur de manipulation par variation de fréquence (94).

4. Terminal de données selon l'une quelconque des revendications 1 à 3, caractérisé en ce que le moyen d'interface de données (34) comprend un second moyen de conversion pour convertir des bits de données en série en bits de données en parallèle et des bits de données en parallèle en bits de données en série.

5. Terminal de données selon la revendication 4, caractérisé en ce que le second moyen de conversion comprend un émetteur/récepteur asynchrone universel.

6. Terminal de données selon l'une quelconque des revendications 1 à 5, caractérisé en ce que le terminal de données (10) comprend un second moyen générateur d'interruption (23) servant à notifier au moyen de traitement à micro-ordinateur (30) les laps de temps dans les données reçues du système central de traitement, incluant un moyen pour contrôler les données reçues du système central de traitement et un moyen pour engendrer un signal d'interruption envoyé au moyen de traitement à micro-ordinateur (30) en réponse à l'absence des données pendant une période prédéterminée.

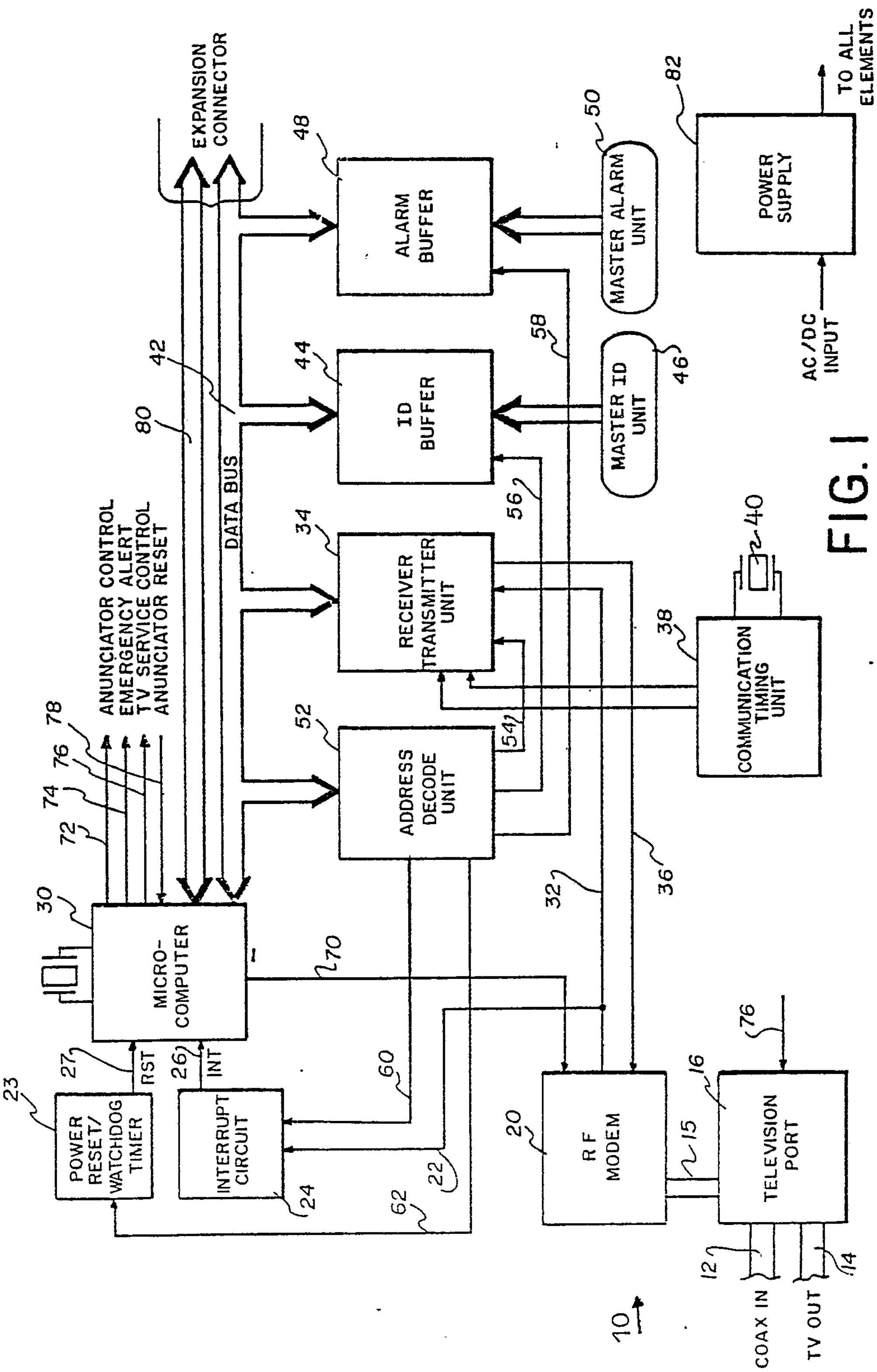
EXPANSION CONNECTOR
ANUNCIATOR CONTROL
EMERGENCY ALERT
TV SERVICE CONTROL
ANUNCIATOR RESET
DATA BUS
ALARM BUFFER
ID BUFFER
RECEIVER TRANSMITTER UNIT
ADDRESS DECODE UNIT
MASTER ALARM UNIT
MASTER ID UNIT
POWER SUPPLY
TO ALL ELEMENTS
AC/DC INPUT
COMMUNICATION TIMING UNIT
MICRO-COMPUTER
POWER RESET/ WATCHDOG TIMER
INTERRUPT CIRCUIT
RST
INT
RF MODEM
TELEVISION PORT
COAX IN
TV OUT
10
12
14
15
16
20
22
23
24
26
27
30
32
34
36
38
40
42
44
46
48
50
52
54
56
58
60
62
70
72
74
76
78
80
82

FIG. I

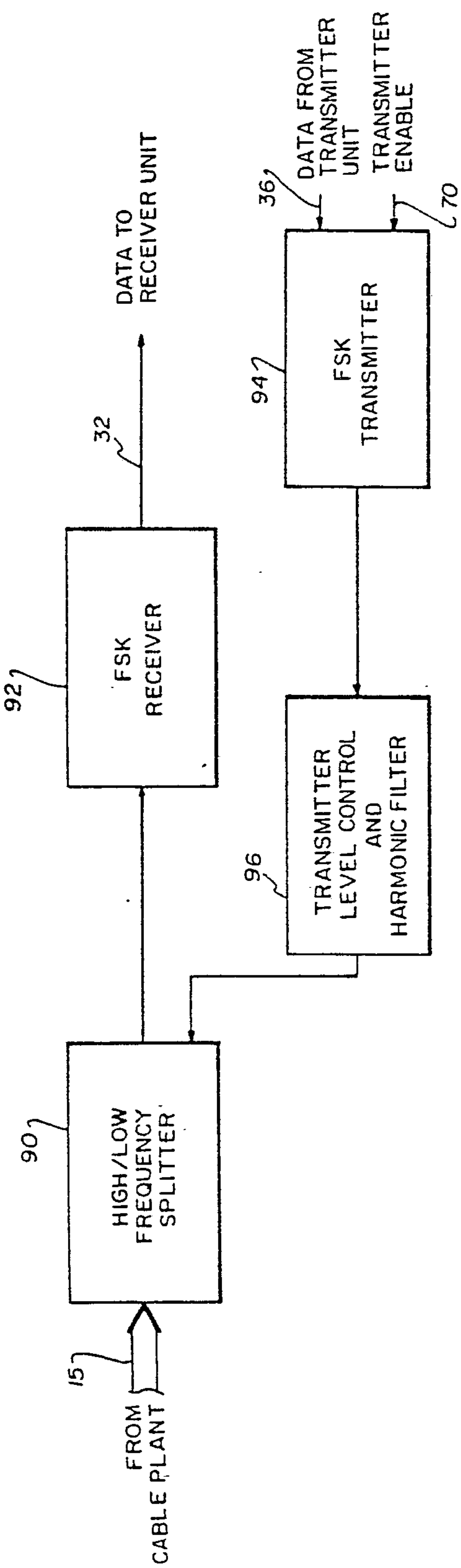
FROM
CABLE PLANT
15
90
HIGH/LOW
FREQUENCY
SPLITTER
92
FSK
RECEIVER
32
DATA TO
RECEIVER UNIT
96
TRANSMITTER
LEVEL CONTROL
AND
HARMONIC FILTER
94
FSK
TRANSMITTER
36
DATA FROM
TRANSMITTER
UNIT
70
TRANSMITTER
ENABLE

FIG. 2

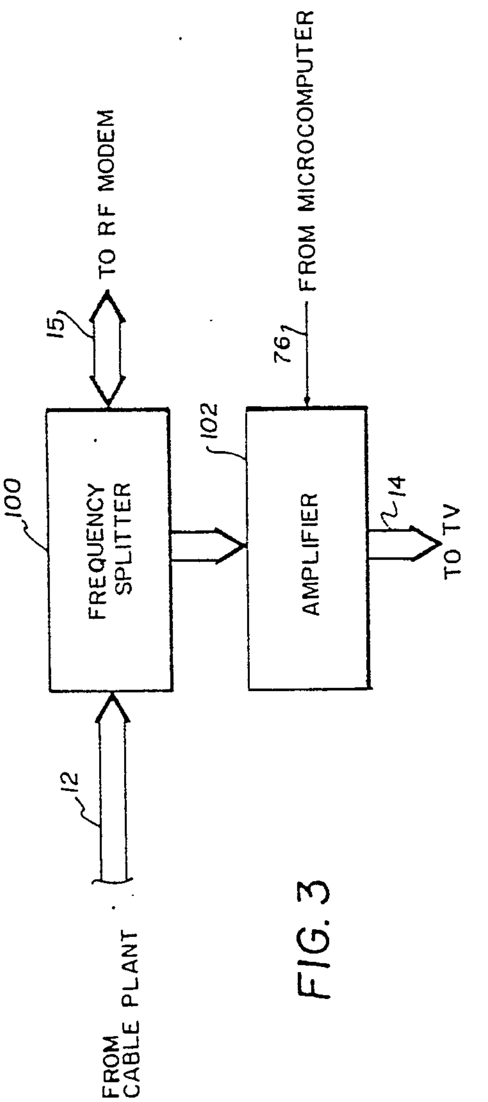

FROM CABLE PLANT
12
FREQUENCY SPLITTER
100
15
TO RF MODEM
AMPLIFIER
102
76
FROM MICROCOMPUTER
14
TO TV


FIG. 3

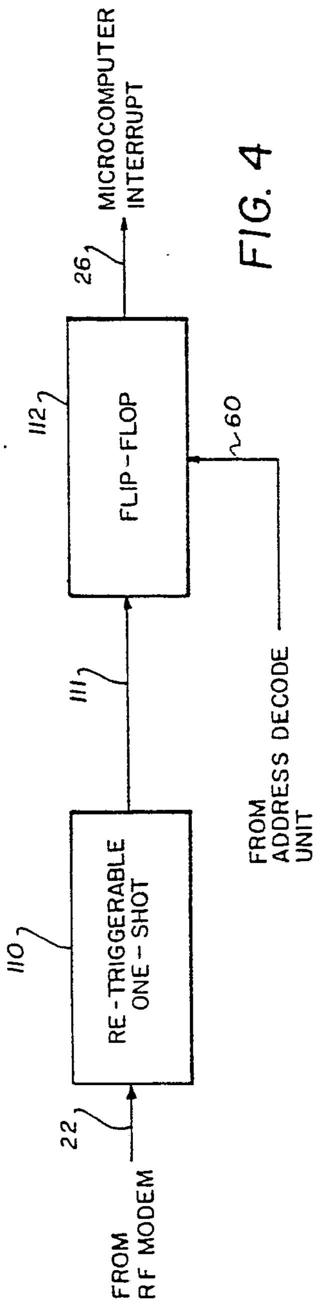

FROM RF MODEM
22
RE-TRIGGERABLE ONE-SHOT
110
111
FLIP-FLOP
112
60
FROM ADDRESS DECODE UNIT
26
MICROCOMPUTER INTERRUPT


FIG. 4

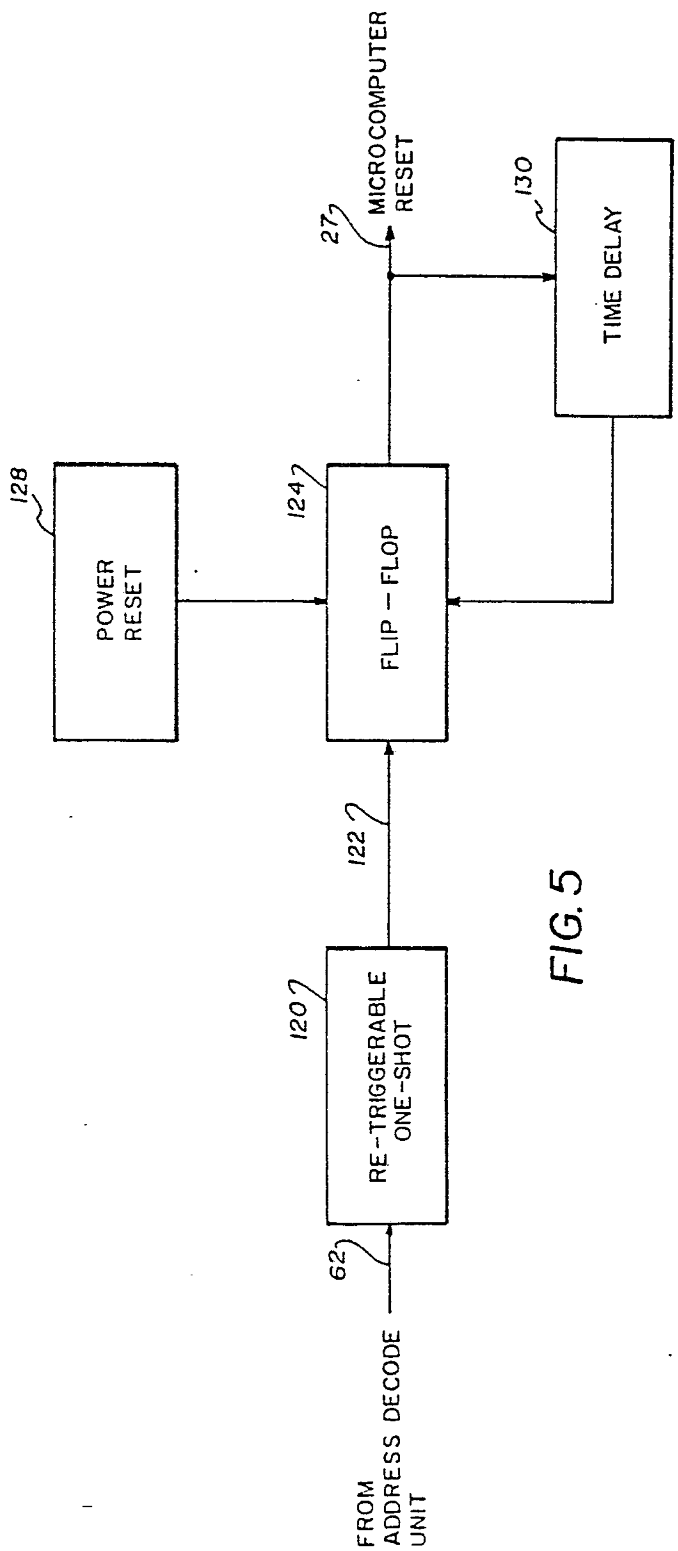
MICROCOMPUTER RESET
27
TIME DELAY
130
POWER RESET
128
FLIP – FLOP
124
122
RE-TRIGGERABLE ONE-SHOT
120
62
FROM ADDRESS DECODE UNIT

FIG. 5

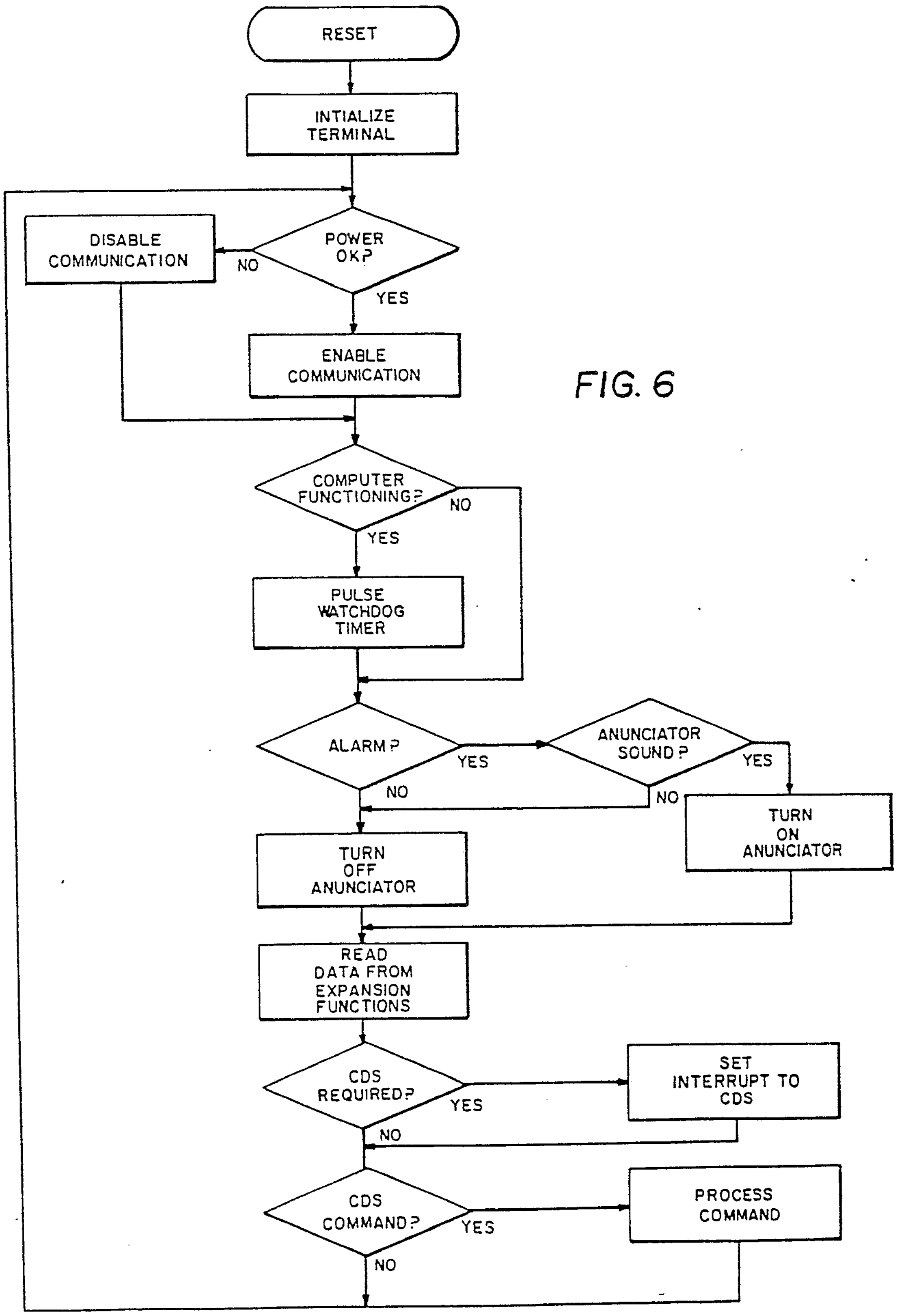
RESET
INTIALIZE TERMINAL
POWER OK?
NO
YES
DISABLE COMMUNICATION
ENABLE COMMUNICATION
COMPUTER FUNCTIONING?
NO
YES
PULSE WATCHDOG TIMER
ALARM?
YES
NO
ANUNCIATOR SOUND?
YES
NO
TURN ON ANUNCIATOR
TURN OFF ANUNCIATOR
READ DATA FROM EXPANSION FUNCTIONS
CDS REQUIRED?
YES
NO
SET INTERRUPT TO CDS
CDS COMMAND?
YES
NO
PROCESS COMMAND

FIG. 6

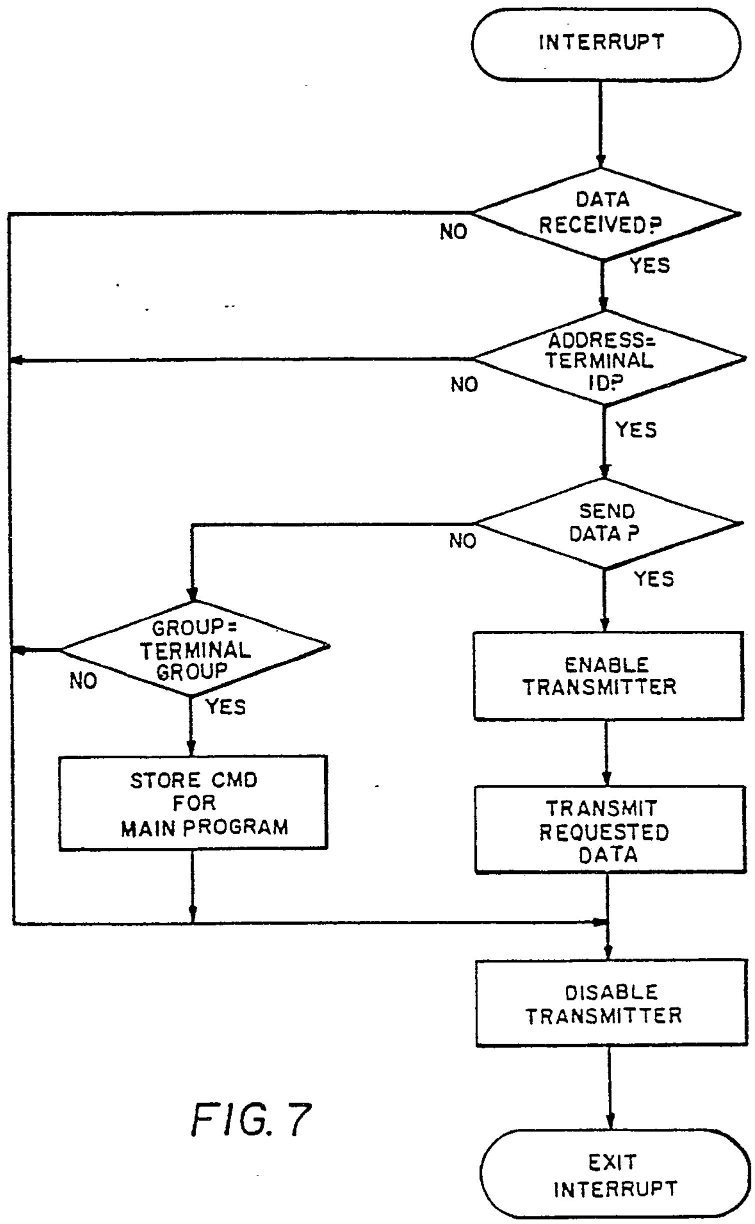
INTERRUPT
DATA RECEIVED?
NO
YES
ADDRESS= TERMINAL ID?
NO
YES
SEND DATA ?
NO
YES
GROUP= TERMINAL GROUP
NO
YES
ENABLE TRANSMITTER
STORE CMD FOR MAIN PROGRAM
TRANSMIT REQUESTED DATA
DISABLE TRANSMITTER
EXIT INTERRUPT

FIG. 7